# EUROPEAN PATENT APPLICATION

(11) **EP 4 459 930 A1**
(43) Date of publication of application: **06.11.2024**
(21) Application number: 23762942.3
(22) Date of filing: 02.03.2023
(51) Int. Cl.: H04L 12/18

(54) **METHOD AND APPARATUS FOR DISCOVERING ROOT NODE**

(30) Priority: 04.03.2022 CN 202210211672
(71) Applicant: Huawei Technologies Co., Ltd., Shenzhen, Guangdong 518129 (CN)
(72) Inventor: ZHANG, Yaokun, Shenzhen, Guangdong 518129 (CN); YUAN, Ruyue, Shenzhen, Guangdong 518129 (CN); XIE, Jingrong, Shenzhen, Guangdong 518129 (CN)
(74) Representative: MERH-IP Matias Erny Reichl Hoffmann Patentanwälte PartG mbB
(86) International application number: PCT/CN2023/079181
(87) International publication number: WO 2023/165544

(57) **Abstract**

This application provides a method and an apparatus for discovering a root node, to implement dual-root protection in a process of transmitting a multicast data packet over an automatic multicast tunneling (automatic multicast tunneling, AMT) network, so as to avoid transmission interruption and improve network stability. In the method, a first network device receives a first packet from a multicast source, where the first packet is used to discover a root node; and the first network device sends a response packet for the first packet to the multicast source, where the response packet for the first packet includes address information of the root node, and the root node includes the first network device and a second network device.

## Description

This application claims priority to Chinese Patent Application No. 202210211672.1, filed with the China National Intellectual Property Administration on March 4, 2022 and entitled "METHOD AND APPARATUS FOR DISCOVERING ROOT NODE", which is incorporated herein by reference in its entirety.

### TECHNICAL FIELD

This application relates to the field of communication technologies, and in particular, to a method and an apparatus for discovering a root node.

### BACKGROUND

In a multicast communication process, some transit nodes between a multicast source (source) and a receiver (receiver) of multicast information may lack a multicast capability (Lack multicast capability), which may easily cause transmission interruption of the multicast information. Therefore, an automatic multicast tunneling (automatic multicast tunneling, AMT) technology is currently proposed to resolve the transmission interruption problem.

Currently, in an AMT network, a device connected to a multicast source is referred to as a relay (relay) device, a device connected to an information receiver is referred to as a gateway (gateway) device, and the relay device and the gateway device are connected over an intermediate network lacking a multicast capability. In other words, that the relay device and the gateway device are connected over the intermediate network lacking a multicast capability means that the relay device may be referred to as a root node of the intermediate network, and the gateway device may be referred to as a leaf node of the intermediate network. Further, in the AMT network, after receiving multicast information from the multicast source, the relay device encapsulates the multicast information into unicast information and forwards the unicast information. After the unicast information traverses the intermediate network lacking a multicast capability to reach the gateway device, the gateway device processes the received unicast information into the multicast information, and then forwards the multicast information. However, in the current AMT network, no solution has been proposed to transmit the multicast information between the multicast source and the relay device. Therefore, in the AMT network, how to protect transmission of the multicast information between the multicast source and the relay device to avoid transmission interruption is an urgent technical problem to be resolved.

### SUMMARY

This application provides a method and an apparatus for discovering a root node, to implement dual-root protection in a process of transmitting a multicast data packet over an AMT network, so as to avoid transmission interruption and improve network stability.

A first aspect of this application provides a method for discovering a root node. The method is applied to an AMT network. The method is performed by a first network device, or the method is performed by some components (for example, a processor, a chip, or a chip system) in the first network device, or the method is implemented by a logical module or software that can implement all or some functions of the first network device. In the first aspect and possible implementations of the first aspect, an example in which the method for discovering a root node is performed by the first network device is used for description. The first network device is a device, for example, a router, a switch, or a virtual machine. In the method, the first network device receives a first packet from a multicast source, where the first packet is used to discover a root node; and the first network device sends a response packet for the first packet to the multicast source, where the response packet for the first packet includes address information of the root node, and the root node includes the first network device and a second network device.

According to the foregoing technical solution, the response packet, for the first packet, sent by the first network device to the multicast source after the first network device receives, from the multicast source, the first packet used to discover the root node includes the address information of the root node, and the root node includes the first network device and the second network device. In other words, the response packet, for the first packet, received by the multicast source includes address information of at least two network devices that serve as root nodes. In view of this, the multicast source can determine that the root node in the AMT network includes the at least two network devices, to implement dual-root protection in a process of transmitting a multicast data packet over the AMT network, so as to avoid transmission interruption and improve network stability.

In a possible implementation of the first aspect, after that the first network device sends a response packet for the first packet to the multicast source, the method further includes: The first network device obtains a multicast data packet; and the first network device sends the multicast data packet to a leaf node.

According to the foregoing technical solution, after the first network device sends the response packet for the first packet to the multicast source, the first network device obtains the multicast data packet and sends the multicast data packet to the leaf node, so that the leaf node obtains the multicast data packet, to transmit the multicast data packet over the AMT network.

In a possible implementation of the first aspect, after the multicast source determines, based on the response packet sent by the first network device, that the root node in the AMT network includes the at least two network devices, the multicast source may transmit the multicast data packet in a plurality of implementations. The following separately describes the implementations.

Implementation 1: A process in which the first network device obtains the multicast data packet includes: The first network device receives the multicast data packet from the multicast source.

According to the foregoing technical solution, in the implementation 1, the multicast source sends multicast data packets to the at least two network devices. Alternatively, in the implementation 1, the multicast source sends a multicast data packet to the first network device in the at least two network devices, and the multicast source does not send a multicast data packet to the second network device in the at least two network devices. In view of this, the first network device can obtain, by receiving the multicast data packet from the multicast source, a multicast data packet subsequently sent to the leaf node.

In a possible implementation of the implementation 1, the method further includes: The first network device sends the multicast data packet to the second network device.

According to the foregoing technical solution, in the implementation 1, when the multicast source sends the multicast data packet to the first network device in the at least two network devices, and the multicast source does not send the multicast data packet to the second network device in the at least two network devices, the first network device may further send the multicast data packet to the second network device, so that the second network device can also obtain the multicast data packet. This improves reliability of transmitting the multicast data packet over the AMT network through forwarding of the multicast data packet between different root nodes and in a redundancy protection manner, to implement dual-root protection.

Implementation 2: That the first network device obtains a multicast data packet includes: The first network device receives a multicast data packet from the second network device.

According to the foregoing technical solution, in the implementation 2, the multicast source sends a multicast data packet to the second network device in the at least two network devices, and the multicast source does not send a multicast data packet to the first network device in the at least two network devices. In view of this, the first network device can obtain, by receiving the multicast data packet from the second network device, a multicast data packet subsequently sent to the leaf node. In addition, the implementation 2 improves reliability of transmitting the multicast data packet over the AMT network through forwarding of the multicast data packet between different root nodes and in a redundancy protection manner, to implement dual-root protection.

In a possible implementation of the first aspect, after that a first network device receives a first packet from a multicast source, the method further includes: The first network device sends a second packet to the second network device, where the second packet includes address information of the multicast source, and the second packet is used to advertise the multicast source.

According to the foregoing technical solution, after the first network device receives, from the multicast source, the first packet used to discover the root node, the first network device sends, to the second network device, the second packet used to advertise the multicast source, so that the second network device determines that the second network device is to serve as one of root nodes for transmitting the multicast data packet, to implement dual-root protection in a process of transmitting the multicast data packet over the AMT network.

In a possible implementation of the first aspect, after that the first network device sends a response packet for the first packet to the multicast source, the method further includes: When the first network device determines that the second network device fails, the first network device sends first indication information to the multicast source, where the first indication information indicates that the second network device fails.

According to the foregoing technical solution, the first network device sends the response packet for the first packet to the multicast source, so that the multicast source determines that the root node in the AMT network includes the first network device and the second network device. Then, when the first network device determines that the second network device fails, the first network device sends, to the multicast source, the first indication information indicating that the second network device fails. In view of this, the multicast source can determine, based on the first indication information, that the second network device fails, so that the multicast source determines that the root node in the AMT network, namely, the second network device, does not have a capability of forwarding a multicast data packet.

Optionally, after receiving the first indication information, the multicast source may stop sending the multicast data packet to the second network device, to reduce overheads.

Optionally, when the first network device determines that the second network device fails, the first network device stops sending the multicast data packet to the second network device, to reduce overheads.

It should be noted that, in this embodiment of this application, a failure, determined by the first network device, of the second network device includes but is not limited to: a failure of the entire second network device, a failure of an interface for connecting the second network device to a third-party network, a failure of a routing link between the second network device and the first network device, and a failure of a link between the second network device and the multicast source.

In a possible implementation of the first aspect, after that the first network device sends first indication information to the multicast source, the method further includes: When the first network device determines that the second network device recovers from the failure, the first network device sends second indication information to the multicast source, where the second indication information indicates that the second network device recovers from the failure.

According to the foregoing technical solution, after the first network device sends, to the multicast source, the first indication information indicating that the second network device fails, when the first network device determines that the second network device recovers from the failure, the first network device sends, to the multicast source, the second indication information indicating that the second network device recovers from the failure. In view of this, the multicast source can determine, based on the second indication information, that the second network device recovers from the failure, so that the multicast source determines that the root node in the AMT network, namely, the second network device, is to recover a capability of forwarding a multicast data packet.

Optionally, after receiving the second indication information, the multicast source can further send the multicast data packet to the second network device, to implement dual-root protection in a process of transmitting the multicast data packet over the AMT network.

Optionally, when the first network device determines that the second network device recovers from the failure, the first network device (resumes sending) sends the multicast data packet to the second network device, to implement dual-root protection in a process of transmitting the multicast data packet over the AMT network.

In a possible implementation of the first aspect, a logical interface address of the first network device is the same as a logical interface address of the second network device; or a physical interface address of the first network device is the same as a physical interface address of the second network device.

According to the foregoing technical solution, because a destination address of the first packet is the logical interface address (or the physical interface address) of the first network device, the logical interface address of the first network device is made to be the same as the logical interface address of the second network device (or the physical interface address of the first network device is the same as the physical interface address of the second network device), to ensure that a routing path between the multicast source and the second network device is connected. In other words, after the first network device sends the response packet for the first packet to the multicast source, it needs to be ensured that the multicast source can subsequently communicate with the second network device via the connected routing path.

In a possible implementation of the first aspect, an internet protocol (internet protocol, IP) address of the first network device is different from an IP address of the second network device.

According to the foregoing technical solution, the IP address of the first network device is different from the IP address of the second network device, so that subsequent multicast data packets from the multicast source can be respectively sent to the first network device and the second network device based on the different IP addresses, to implement dual-root protection in a process of transmitting the multicast data packet over the AMT network.

In a possible implementation of the first aspect, the first packet is a discovery (Discovery) packet, and the response packet for the first packet is an advertisement (Advertisement) packet.

It should be understood that the first packet is a packet that is sent by the multicast source and used to discover a root node, and a name of the first packet may continue to be a packet name of a packet that is sent by a gateway device currently defined in the AMT network and that is used to discover a root node, namely, a discovery (Discovery) packet. With development of AMT network technologies, the first packet may alternatively be another name. This is not limited in this application. Similarly, a name of the response packet for the first packet may also continue to be a packet name of a packet that is received by the gateway device currently defined in the AMT network and that is used to discover a root node, namely, an advertisement (Advertisement) packet. With development of AMT network technologies, the response packet for the first packet may alternatively be another name. This is not limited in this application.

In a possible implementation of the first aspect, the first network device is a relay (relay) device.

It should be understood that the first network device (or the second network device) is a receiver of the first packet in the AMT network device (or a sender of the response packet for the first packet in the AMT network), and a name of the first network device (or the second network device) may be a relay device currently defined in the AMT network. With development of AMT network technologies, the first network device (or the second network device) may alternatively be in another name. This is not limited in this application.

A second aspect of this application provides a method for discovering a root node. The method is applied to an AMT network. The method is performed by a multicast source, or the method is performed by some components (for example, a processor, a chip, or a chip system) in the multicast source, or the method is implemented by a logical module or software that can implement all or some functions of the multicast source. In the first aspect and possible implementations of the first aspect, an example in which the method for discovering a root node is performed by the multicast source is used for description. The multicast source is a device, for example, a router, a switch, or a virtual machine. In the method, the multicast source sends a first packet, where the first packet is used to discover a root node; and the multicast source receives a response packet for the first packet from a first network device, where the response packet for the first packet includes address information of the root node, and the root node includes the first network device and a second network device.

According to the foregoing technical solution, the response packet, for the first packet, received by the multicast source after the multicast source sends the first packet used to discover the root node includes the address information of the root node, and the root node includes the first network device and the second network device. In other words, the response packet, for the first packet, received by the multicast source includes address information of at least two network devices that serve as root nodes. In view of this, the multicast source can determine that the root node in the AMT network includes the at least two network devices, to implement dual-root protection in a process of transmitting a multicast data packet, avoid transmission interruption, and improve network stability.

In a possible implementation of the second aspect, after the multicast source determines, based on the response packet sent by the first network device, that the root node in the AMT network includes the at least two network devices, the multicast source may transmit the multicast data packet in a plurality of implementations. The following separately describes the implementations.

Implementation 1: after that the multicast source receives a response packet for the first packet from a first network device, the method further includes: The multicast source sends a multicast data packet to the first network device.

According to the foregoing technical solution, in the implementation 1, the multicast source sends multicast data packets to the at least two network devices. Alternatively, in the implementation 1, the multicast source sends a multicast data packet to the first network device in the at least two network devices, and the multicast source does not send a multicast data packet to the second network device in the at least two network devices. In view of this, the multicast source sends the multicast data packet to the first network device, so that the first network device obtains, by receiving the multicast data packet from the multicast source, a multicast data packet subsequently sent to a leaf node.

In a possible implementation of the second aspect, after that the multicast source receives a response packet for the first packet from a first network device, the method further includes: The multicast source sends a multicast data packet to the second network device.

According to the foregoing technical solution, in an implementation 2, the multicast source sends multicast data packets to the at least two network devices; or in an implementation 2, the multicast source sends a multicast data packet to the second network device in the at least two network devices, and the multicast source does not send a multicast data packet to the first network device in the at least two network devices. In view of this, the multicast source sends the multicast data packet to the second network device, so that the second network device obtains, by receiving the multicast data packet from the multicast source, a multicast data packet subsequently sent to a leaf node.

In a possible implementation of the second aspect, the method further includes: The multicast source receives first indication information from the first network device, where the first indication information indicates that the second network device fails; and the multicast source determines, based on the first indication information, to stop sending the multicast data packet to the second network device.

According to the foregoing technical solution, after the multicast source determines that the root node in the AMT network includes the first network device and the second network device, when the first network device determines that the second network device fails, the multicast source receives, from the first network device, the first indication information indicating that the second network device fails. In view of this, the multicast source can determine, based on the first indication information, that the second network device fails, so that the multicast source determines that the root node in the AMT network, namely, the second network device, does not have a capability of forwarding a multicast data packet. In addition, after receiving the first indication information, the multicast source may stop sending the multicast data packet to the second network device, to reduce overheads.

In a possible implementation of the second aspect, after that the multicast source determines, based on the first indication information, to stop sending the multicast data packet to the second network device, the method further includes: The multicast source obtains second indication information, where the second indication information indicates that the second network device recovers from the failure; and the multicast source sends the multicast data packet to the second network device based on the second indication information.

According to the foregoing technical solution, after the multicast source receives, from the first network device, the first indication information indicating that the second network device fails, the multicast source can further obtain the second indication information indicating that the second network device recovers from the failure. In view of this, the multicast source can determine, based on the second indication information, that the second network device recovers from the failure, so that the multicast source determines that the root node in the AMT network, namely, the second network device, is to recover a capability of forwarding a multicast data packet. In addition, after receiving the second indication information, the multicast source can further send the multicast data packet to the second network device, to implement dual-root protection in a process of transmitting the multicast data packet over the AMT network.

In a possible implementation of the second aspect, that the multicast source obtains second indication information includes: the multicast source receives the second indication information from the first network device; or the multicast source receives the second indication information from the second network device.

According to the foregoing technical solution, the multicast source can determine, based on an indication of the first network device or based on an indication of the second network device, that the second network device recovers from the failure, to provide a plurality of implementations, so that the multicast source determines that the root node in the AMT network, namely, the second network device, is to recover the capability of forwarding a multicast data packet.

In a possible implementation of the second aspect, the first packet is a discovery (Discovery) packet, and the response packet for the first packet is an advertisement (Advertisement) packet.

It should be understood that the first packet is a packet that is sent by the multicast source and used to discover a root node, and a name of the first packet may continue to be a packet name of a packet that is sent by a gateway device currently defined in the AMT network and that is used to discover a root node, namely, a discovery (Discovery) packet. With development of AMT network technologies, the first packet may alternatively be another name. This is not limited in this application. Similarly, a name of the response packet for the first packet may also continue to be a packet name of a packet that is received by the gateway device currently defined in the AMT network and that is used to discover a root node, namely, an advertisement (Advertisement) packet. With development of AMT network technologies, the response packet for the first packet may alternatively be another name. This is not limited in this application.

In a possible implementation of the second aspect, the first network device is a relay (relay) device.

It should be understood that the first network device (or the second network device) is a receiver of the first packet in the AMT network device (or a sender of the response packet for the first packet in the AMT network), and a name of the first network device (or the second network device) may be a relay device currently defined in the AMT network. With development of AMT network technologies, the first network device (or the second network device) may alternatively be in another name. This is not limited in this application.

A third aspect of this application provides an apparatus for discovering a root node. The apparatus can implement the method according to any one of the first aspect or the possible implementations of the first aspect. The apparatus includes a corresponding unit or module configured to perform the method. The unit or module included in the apparatus can be implemented by software and/or hardware. For example, the apparatus may be a first network device, or the apparatus may be a component (for example, a processor, a chip, or a chip system) in the first network device, or the apparatus may be a logical module or software that can implement all or some functions of the first network device.

The apparatus includes a receiving unit and a sending unit.

The receiving unit is configured to receive a first packet from a multicast source, where the first packet is used to discover a root node.

The sending unit is configured to send a response packet for the first packet to the multicast source, where the response packet for the first packet includes address information of the root node, and the root node includes the first network device and a second network device.

In a possible implementation of the third aspect, the receiving unit is further configured to obtain a multicast data packet; and the sending unit is further configured to send the multicast data packet to a leaf node.

In a possible implementation of the third aspect, the receiving unit is specifically configured to receive a multicast data packet from the multicast source.

In a possible implementation of the third aspect, the sending unit is further configured to send the multicast data packet to the second network device.

In a possible implementation of the third aspect, the receiving unit is specifically configured to receive a multicast data packet from the second network device.

In a possible implementation of the third aspect, the sending unit is further configured to send a second packet to the second network device, where the second packet includes address information of the multicast source, and the second packet is used to advertise the multicast source.

In a possible implementation of the third aspect, the apparatus further includes a processing unit; and the sending unit is further configured to send first indication information to the multicast source when the processing unit determines that the second network device fails, where the first indication information indicates that the second network device fails.

In a possible implementation of the third aspect, the sending unit is further configured to send second indication information to the multicast source when the processing unit determines that the second network device recovers from the failure, where the second indication information indicates that the second network device recovers from the failure.

In a possible implementation of the third aspect, a logical interface address of the first network device is the same as a logical interface address of the second network device; or a physical interface address of the first network device is the same as a physical interface address of the second network device.

In a possible implementation of the third aspect, an IP address of the first network device is different from an IP address of the second network device.

In a possible implementation of the third aspect, the first packet is a discovery packet, and the response packet for the first packet is an advertisement packet.

In a possible implementation of the third aspect, the first network device is a relay (relay) device in the AMT network.

In the third aspect of embodiments of this application, composition modules of the apparatus for discovering a root node may be further configured to: perform the steps performed in the possible implementations of the first aspect, and implement corresponding technical effects. For details, refer to the first aspect. Details are not described herein again.

A fourth aspect of this application provides an apparatus for discovering a root node. The apparatus can implement the method according to any one of the second aspect or the possible implementations of the second aspect. The apparatus includes a corresponding unit or module configured to perform the method. The unit or module included in the apparatus can be implemented by software and/or hardware. For example, the apparatus may be a multicast source, or the apparatus may be a component (for example, a processor, a chip, or a chip system) in the multicast source, or the apparatus may be a logical module or software that can implement all or some functions of the multicast source.

The apparatus includes a sending unit and a receiving unit.

The sending unit is configured to send a first packet, where the first packet is used to discover a root node.

The receiving unit is configured to receive a response packet for the first packet from a first network device, where the response packet for the first packet includes address information of the root node, and the root node includes the first network device and a second network device.

In a possible implementation of the fourth aspect, the sending unit is further configured to send a multicast data packet to the first network device.

In a possible implementation of the fourth aspect, the sending unit is further configured to send a multicast data packet to the second network device.

In a possible implementation of the fourth aspect, the apparatus further includes a processing unit; the receiving unit is further configured to receive first indication information from the first network device, where the first indication information indicates that the second network device fails; and the processing unit is configured to determine, based on the first indication information, to stop sending the multicast data packet to the second network device.

In a possible implementation of the fourth aspect, the receiving unit is further configured to obtain second indication information, where the second indication information indicates that the second network device recovers from the failure; and the sending unit is further configured to send the multicast data packet to the second network device based on the second indication information.

In a possible implementation of the fourth aspect, the receiving unit is specifically configured to: receive the second indication information from the first network device; or receive the second indication information from the second network device.

In a possible implementation of the fourth aspect, the first packet is a discovery packet, and the response packet for the first packet is an advertisement packet.

In a possible implementation of the fourth aspect, the first network device is a relay device.

In the fourth aspect of embodiments of this application, composition modules of the apparatus for discovering a root node may be further configured to: perform the steps performed in the possible implementations of the second aspect, and implement corresponding technical effects. For details, refer to the second aspect. Details are not described herein again.

A fifth aspect of embodiments of this application provides an apparatus for discovering a root node, including at least one processor. The at least one processor is coupled to a memory, and the memory is configured to store a program or instructions.

The at least one processor is configured to execute the program or the instructions, to enable the apparatus to implement the method according to any one of the first aspect or the possible implementations of the first aspect.

A sixth aspect of embodiments of this application provides an apparatus for discovering a root node, including at least one processor. The at least one processor is coupled to a memory, and the memory is configured to store a program or instructions.

The at least one processor is configured to execute the program or the instructions, to enable the apparatus to implement the method according to any one of the second aspect or the possible implementations of the second aspect.

A seventh aspect of embodiments of this application provides an apparatus for discovering a root node, including at least one logic circuit and an input/output interface. The logic circuit is configured to perform the method according to any one of the first aspect or the possible implementations of the first aspect, or the logic circuit is configured to perform the method according to any one of the second aspect or the possible implementations of the second aspect.

An eighth aspect of embodiments of this application provides a computer-readable storage medium, configured to store computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

A ninth aspect of embodiments of this application provides a computer program product (or referred to as a computer program). When the computer program product is executed by a processor, the processor performs the method according to any one of the first aspect or the possible implementations of the first aspect, or the processor performs the method according to any one of the second aspect or the possible implementations of the second aspect.

A tenth aspect of embodiments of this application provides a chip system. The chip system includes at least one processor, configured to support an apparatus for discovering a root node in implementing a function according to any one of the first aspect or the possible implementations of the first aspect; or configured to support the apparatus for discovering a root node in implementing a function according to any one of the second aspect or the possible implementations of the second aspect.

In a possible design, the chip system may further include a memory. The memory is configured to store program instructions and data that are necessary for the apparatus for discovering a root node. The chip system may include a chip, or may include a chip and another discrete component. Optionally, the chip system further includes an interface circuit, and the interface circuit provides program instructions and/or data for the at least one processor.

An eleventh aspect of embodiments of this application provides a system for discovering a root node. The system for discovering a root node includes the apparatus for discovering a root node according to the third aspect and the apparatus for discovering a root node according to the fourth aspect.

A twelfth aspect of embodiments of this application provides a system for discovering a root node. The system for discovering a root node includes the apparatus for discovering a root node according to the fifth aspect and the apparatus for discovering a root node according to the sixth aspect.

For technical effects brought by any design manner of the third aspect to the twelfth aspect, refer to the technical effects brought by different implementations of the first aspect and the second aspect. Details are not described herein.

### BRIEF DESCRIPTION OF DRAWINGS

To describe the technical solutions in embodiments of the present invention or in the conventional technology more clearly, the following briefly describes the accompanying drawings for describing embodiments or the conventional technology. It is clear that the accompanying drawings in the following descriptions show merely some embodiments of the present invention, and a person of ordinary skill in the art may still derive other drawings from these accompanying drawings without creative efforts.
FIG. 1 is a diagram of an application scenario according to an embodiment of this application;
FIG. 2 is another diagram of an application scenario according to an embodiment of this application;
FIG. 3a is another diagram of an application scenario according to an embodiment of this application;
FIG. 3b is another diagram of an application scenario according to an embodiment of this application;
FIG. 3c is another diagram of an application scenario according to an embodiment of this application;
FIG. 3d is another diagram of an application scenario according to an embodiment of this application;
FIG. 4 is a diagram of a method for discovering a root node according to an embodiment of this application;
FIG. 5a is a diagram of a packet format according to an embodiment of this application;
FIG. 5b is another diagram of a packet format according to an embodiment of this application;
FIG. 5c is another diagram of an application scenario according to an embodiment of this application;
FIG. 5d is another diagram of a packet format according to an embodiment of this application;
FIG. 5e is another diagram of a method for discovering a root node according to an embodiment of this application;
FIG. 6 is a diagram of an apparatus for discovering a root node according to an embodiment of this application;
FIG. 7 is another diagram of an apparatus for discovering a root node according to an embodiment of this application; and
FIG. 8 is a diagram of a system for discovering a root node according to an embodiment of this application.

### DESCRIPTION OF EMBODIMENTS

The following describes the technical solutions in embodiments of the present invention with reference to the accompanying drawings in embodiments of the present invention.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally represents an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

It should be noted that, in this application, the terms such as "example" or "for example" are used to represent giving an example, an illustration, or a description. Any embodiment or design solution described as an "example" or "for example" in this application should not be explained as being more preferred or having more advantages than another embodiment or design solution. Exactly, use of the word "example" or "for example" is intended to present a related concept in a specific manner.

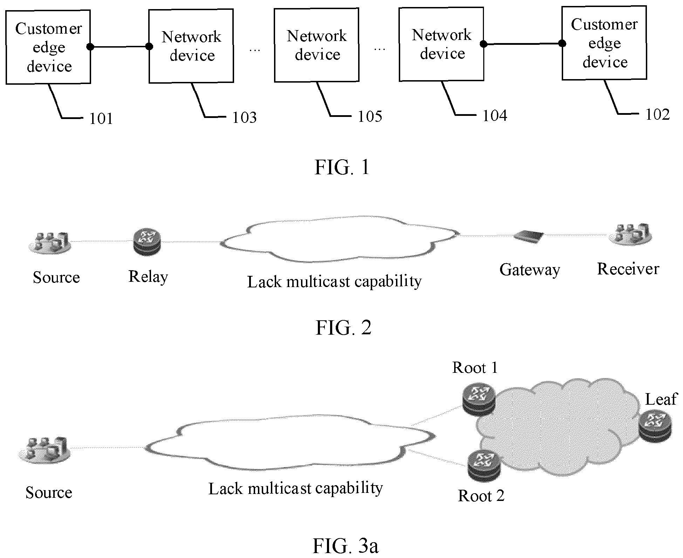

FIG. 1 is a diagram of an architecture of a system for discovering a root node according to an embodiment of this application. As shown in FIG. 1, the system includes a plurality of customer edge (customer edge, CE) devices, for example, a customer edge device 101, a customer edge device 102, and another possible customer edge device; and the system further includes a plurality of network devices, for example, a network device 103, a network device 104, a network device 105, and another possible network device.

In FIG. 1, the customer edge device 101 or the customer edge device 102 is connected to one or more terminal devices, and the terminal devices join a network via a CE device. The terminal device may also be referred to as user equipment (user equipment, UE), a mobile station (mobile station, MS), a mobile terminal (mobile terminal, MT), a terminal, or the like, and is a device that provides voice and/or data connectivity for a user, or a chip disposed in the device, for example, a handheld device or a vehicle-mounted device having a wireless connection function. Currently, for example, the terminal device is a mobile phone, a desktop computer, a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a residential gateway device (SG-residential gateway, SG-RG) that supports SG access, or the like.

Optionally, in FIG. 1, the network device 103, the network device 104, and the network device 105 each are a device like a router (router), a switch (switch), and a virtual machine.

It should be noted that a connection between the network device and the customer edge device (for example, a connection between the customer edge device 101 and the network device 103, or a connection between the customer edge device 102 and the network device 104) shown in FIG. 1 may be a wired connection/wireless connection, and the connection may be further relayed via a joined device. For example, the another device may include a radio access network (radio access network, RAN) node (or device), and may also be referred to as a base station. Currently, for example, the RAN device is a next generation NodeB (generation NodeB, gNodeB) in a SG communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like.

For example, in the system shown in FIG. 1, a network device connected to the customer edge device is a provider edge (provider edge, PE) device. The PE device is configured to transmit a message between the customer edge device 101 and the customer edge device 102. For example, in FIG. 1, both the network device 103 and the network device 104 are PE devices, the customer edge device 101 is connected to the provider edge device 103, and the customer edge device 102 is connected to the provider edge device 104. The another network device includes a provider (provider, P) device, for example, the network device 105. The provider edge device 103 and the provider edge device 104 are connected via one or more provider (provider, P) devices 105.

In the system for discovering a root node shown in FIG. 1, a plurality of communication modes, such as unicast, multicast, or broadcast, may be supported between different devices (including the customer edge device 101, the customer edge device 102, the network device 103, the network device 104, and the network device 105). This application mainly pertains to a communication mode of multicast between the different devices.

Multicast, also referred to as multi-target broadcast or manycast, is a communication method for transmitting information between an information sender and a plurality of information receivers (receiver) in a network. The information sender may also be referred to as a multicast source (source). Multicast is widely applied to network services such as internet protocol television (internet protocol television, IPTV), real-time data transmission, and multimedia conferencing. Multicast can more effectively save network bandwidths and reduce network loads than unicast. However, multicast requires networkwide data communication devices to support multicast transmission.

In a live network, some transit nodes between an information sender and an information receiver may lack a multicast enabling capability due to a policy of the service provider or network restrictions. As a result, transmission of multicast information cannot be interrupted. For example, in a scenario shown in FIG. 2, a device and a network that are included in a network lacking a multicast capability (lack multicast capability) cannot send a corresponding multicast packet from a source to a receiver through conventional multicast communication.

Request for Comments (request for comments, RFC) 7450 defines an AMT technology to resolve the preceding problems. In essence, an AMT network enables multicast information to traverse, in a unicast forwarding mode, a device and a network that lack a multicast capability, without changes or with few changes to existing network infrastructure. RFC7450 also defines roles such as a relay (namely, a device connected to a multicast sending source or a leaf node for a multicast network) and a gateway (namely, a device connected to a multicast receiving terminal). That the relay device and the gateway device are connected over an intermediate network lacking a multicast capability means that the relay device may be referred to as a root node of the intermediate network, and the gateway device may be referred to as a leaf node of the intermediate network.

For example, as shown in FIG. 2, a main task of the AMT network is to perform AMT and user datagram protocol (user datagram protocol, UDP) encapsulation on multicast information, and implement interconnection of the multicast information (including traffic control information, data information, and the like) between the relay device and the gateway device when a network domain between the relay device and the gateway device does not support a multicast function. Specifically, when the multicast information is forwarded from a multicast source to the relay device, the relay device encapsulates the multicast information into an IP/UDP unicast packet as required, and forwards the IP/UDP unicast packet to a corresponding gateway device that needs to receive the multicast information. Then, the gateway device decapsulates the IP/UDP unicast packet, strips off an IP/UDP unicast packet header, and continues to perform multicast forwarding, so that a multicast receiver (receiver) receives the multicast information.

An implementation process of the AMT network includes an implementation phase of relay discovery (Relay Discovery). In this implementation phase, the gateway device sends relay discovery information carrying anycast addressing (anycast addressing) to "discover (or search for)" a nearest relay device in a corresponding network segment, and ensures subsequent process verification by using a randomly generated random nonce (random nonce). After receiving the information, the relay device sends relay advertisement (Relay Advertisement) information to advertise the gateway device a unicast address of the relay device.

It is foreseeable that the technology has a wide application prospect in internet multicast, especially in a scenario in which multicast traffic traverses a radio air interface. During actual networking, in a network architecture shown in FIG. 2, not only the receiver and the gateway device face a challenge of lacking a multicast capability, but also the multicast source and the relay device face this challenge. Especially in a large quantity of cloud-network applications, the multicast source and the multicast receiver are usually integrated, that is, a device may function as both a source and a receiver.

In RFC7450, an AMT technology between the source and a root node is not described because the AMT technology is universal in essence. Therefore, "relay" and "gateway" are still used. To be specific, the "relay" indicates a node nearest to a gateway in a multicast network, and the "gateway" may indicate a receiver (receiver) or a multicast source (source). As described in "relay discovery (Relay Discovery)", the gateway device forwards traffic only to a relay device nearest to a route and discovers only a root node nearest to the route. If an AMT technology between "the gateway device and the relay device" is still used, for communication between "the source and the root node", only communication between a source node and a single root node can be implemented.

However, because a network environment for a single root node is not stable enough, network communication depending on the root node is easily interrupted when the single root node is overloaded or a device failure occurs. Therefore, when the AMT technology between "the gateway device and the relay device" is still used for a communication manner between "the source and the root node", currently, it is urgent to improve the communication manner between "the source and the root node" to implement traffic protection for the root node, so as to improve network stability.

Atypical implementation is "dual-root" protection, to be specific, more than one root node is set, to implement traffic protection for the root node. In an implementation scenario shown in FIG. 3a, a leaf node represents a "gateway device" in an AMT network, and a root node (including a root 1 and a root 2) represents a "relay device" in the AMT network. Compared with a network architecture with a single root node, the scenario shown in FIG. 3a can improve network stability to some extent. The following describes possible implementation solutions of "dual-root" protection.

Solution 1: Traffic replication is performed on an intermediate network between a multicast source and a root node. However, this solution is difficult to deploy. In a layer-3 network, it is difficult to replicate unicast traffic. For an unknown network lacking a multicast capability, multicast traffic cannot be transmitted. In addition, a router network cannot ensure third-party cooperation and compliance with deployment requirements.

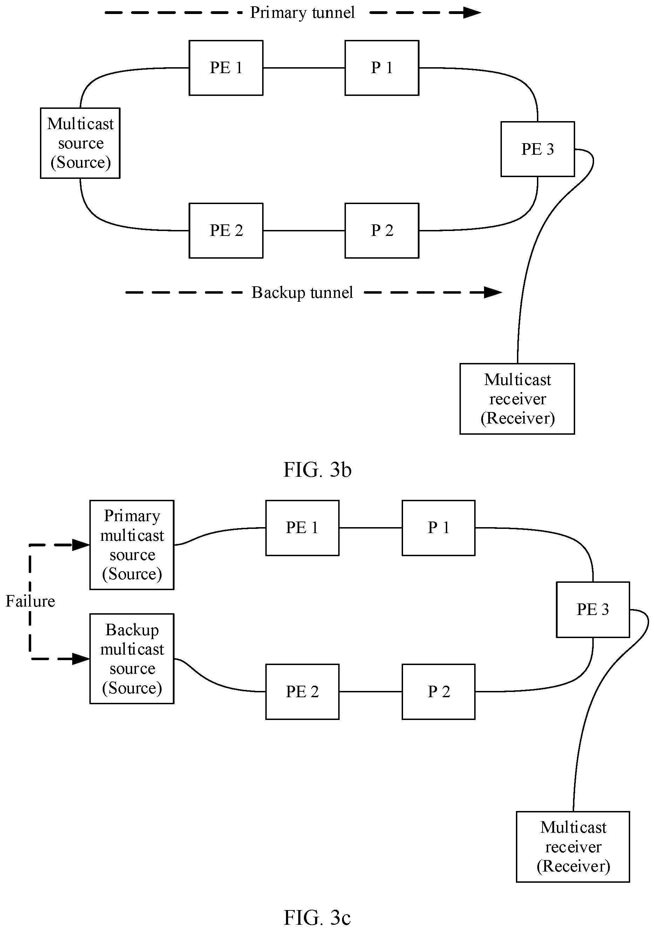

In an implementation example of the solution 1, as shown in FIG. 3b, when a sender PE node fails, dual-root 1+1 protection may be configured to ensure that a child leaf node can rapidly receive data sent from a backup root. Specifically, when multicast data traffic is normally forwarded over a next generation multicast virtual private network (next generation multicast virtual private network, NG MVPN) service, if a sender PE node located on a point-to-multipoint (point-to-multipoint, P2MP) tunnel fails, a multicast virtual private network service is also interrupted. The multicast service can be restored only through unicast convergence. However, unicast convergence takes a long time, which is unbearable for multicast services that require high reliability. To resolve this problem, the dual-root 1+1 protection may be configured. As shown in FIG. 3b, when the link is normal, multicast data traffic is forwarded bidirectionally along a primary tunnel/a standby tunnel. A leaf node PE3 selectively receives multicast data traffic from the primary tunnel (a P2MP tunnel with a PE 1 as a root) and discards multicast data from the backup tunnel (a P2MP tunnel with a PE 2 as a root). If the root node PE1 or a public network link fails, BFD for P2MP TE/mLDP or traffic detection can be used to quickly find that the P2MP tunnel fails, and choose to receive data sent from the backup tunnel, to greatly increase a convergence speed of the multicast service and improve reliability. However, a prerequisite of this technology is that dual-root nodes (for example, the PE 1 and the PE 2 in FIG. 3b) can normally receive multicast traffic sent by the multicast source, and this technology is applicable to a conventional multicast network. However, this technology is not applicable to an AMT multicast scenario because it cannot be ensured in the AMT scenario that dual-root nodes can receive multicast traffic from the multicast source.

Solution 2: A switch is connected between dual roots and an intermediate network in series, and traffic is replicated to a backup root in a layer 2 transparent transmission mode. However, this solution is difficult to implement. First, usually dual-root devices in a live network are not in a same equipment room or region, and it is difficult to connect the devices to a same switch or a layer 2 domain in series. Second, if the switch fails, the dual-root devices fail to receive traffic.

In an implementation example of the solution 2, FIG. 3c shows a single-source network traffic solution in which a plurality of multicast sources are synchronized to each other. In this solution, a synchronization protocol is run between dual multicast sources. One source is a primary source, and the other source is a backup source. The primary multicast source is responsible for sending multicast traffic to the network. When the primary multicast source fails, the backup multicast source takes over. This solution is easy to deploy and does not require special network configurations. However, convergence performance is poor. After a failure occurs, convergence depends on interior gateway protocol (interior gateway protocol, IGP) and protocol independent multicast (protocol independent multicast, PIM) protocol. Convergence time is expected to be subseconds to several seconds. In addition, there is no standard for a synchronization mechanism, which has high requirements on actual deployment.

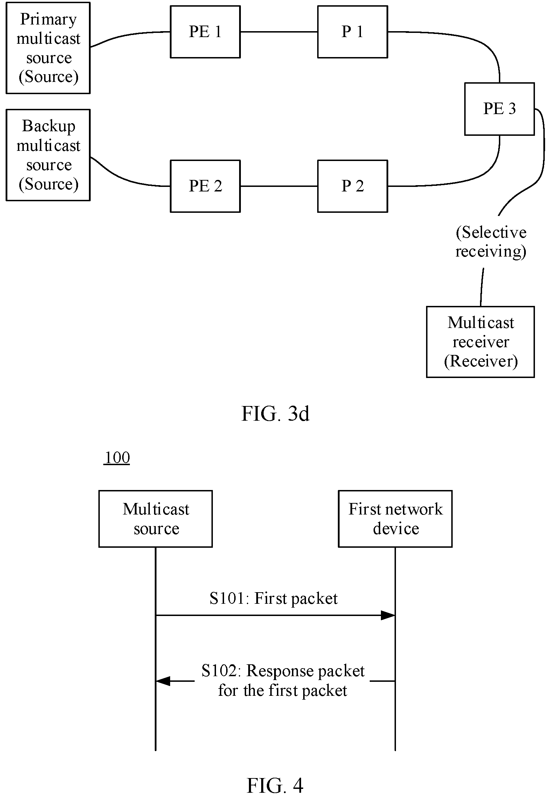

In another implementation example of the solution 2, FIG. 3d shows a dual-source network traffic solution in which sources are unaware of each other. A receiver selectively receives a solution. There is no need to run a synchronization protocol between sources. Two sources send multicast traffic to the network at the same time. In normal cases, the receiver receives two copies of multicast traffic and chooses to use one copy. If one source fails, the receiver selects the other copy of synchronization traffic. However, this solution has high failover efficiency, but two copies of traffic exist in the network at the same time, wasting bandwidths. In addition, this solution has high requirements on the receiver, and the receiver needs to have a selective receiving function. To achieve a zero packet loss, a primary path and a backup path in the network need to be completely isolated. Currently, no actual application deployment case is available to this solution.

In conclusion, in the AMT network, how to protect transmission of the multicast information between the multicast source and the relay device to avoid transmission interruption is an urgent technical problem to be resolved.

In view of this, this application provides a method and an apparatus for discovering a root node, to implement dual-root protection in a process of transmitting a multicast data packet over an AMT network, so as to avoid transmission interruption and improve network stability.

FIG. 4 is a diagram of a method 100 for discovering a root node according to this application. The method 100 for discovering a root node includes the following steps.

S101: A multicast source sends a first packet.

In this embodiment, the multicast source sends the first packet in step S101, and correspondingly, a first network device receives the first packet in step S101. The first packet is used to discover a root node.

S102: The first network device sends a response packet for the first packet.

In this embodiment, the first network device sends the response packet for the first packet in step S102, and correspondingly, the multicast source receives the response packet for the first packet in step S 102. The response packet for the first packet includes address information of the root node, and the root node includes the first network device and a second network device.

In a possible implementation, the first packet is a discovery (Discovery) packet, and the response packet for the first packet is an advertisement (Advertisement) packet. It should be understood that the first packet is a packet that is sent by the multicast source and used to discover a root node, and a name of the first packet may continue to be a packet name of a packet that is sent by a gateway device currently defined in an AMT network and that is used to discover a root node, namely, a discovery (Discovery) packet. With development of AMT network technologies, the first packet may alternatively be another name. This is not limited in this application. Similarly, a name of the response packet for the first packet may also continue to be a packet name of a packet that is received by the gateway device currently defined in the AMT network and that is used to discover a root node, namely, an advertisement (Advertisement) packet. With development of AMT network technologies, the response packet for the first packet may alternatively be another name. This is not limited in this application.

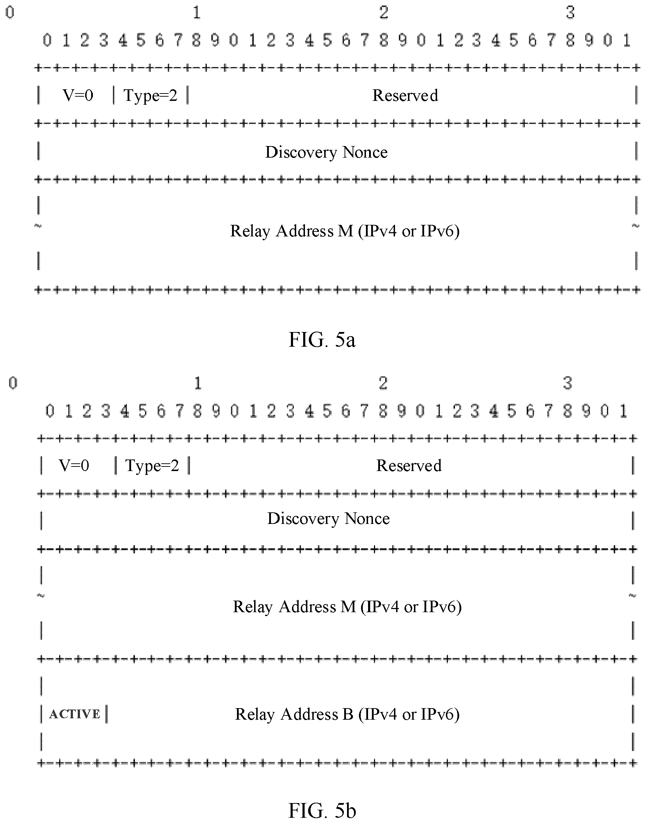

For example, FIG. 5a is a diagram of a packet format of a response packet (namely, an advertisement packet) sent by a relay device based on a discovery packet that is sent by a gateway device during communication between "the gateway device and the relay device". The advertisement packet includes the following fields:
version (Version, denoted as V): with a value of 0, used to indicate a version of an AMT protocol;
packet type (Type): with a value of 2, used to indicate an AMT packet type, so that after a packet of this type is received, the packet is determined as an advertisement packet based on "Type=2";
reserved (Reserved): indicates a reserved field;
discovery nonce (Discovery Nonce): used for verification; and
relay device address information (Relay Address M (IPv4 or IPv6)): indicates an internet protocol version 4 (internet protocol version 4, IPv4) address or an internet protocol version 6 (internet protocol version 6, IPv6) address of the root node (namely, the first network device).

Optionally, after receiving the advertisement packet, the gateway device may determine, based on a "discovery code" field, that a discovery nonce in an advertisement in a relay response is the same as a discovery nonce in the discover packet. In this case, the gateway device determines that the advertisement packet is a valid response packet.

During communication between "the multicast source and the relay device" in this application, after the multicast source sends the first packet in step S101, compared with an implementation process of the response packet during communication between "the gateway device and the relay device" shown in FIG. 5a, in an implementation process in which the multicast source receives the response packet for the first packet received in step S102, a field may be added to indicate addresses of other root nodes. FIG. 5b shows an implementation example. The response packet, for the first packet, included in step S102 includes the following fields:
version (Version, denoted as V): with a value of 0, used to indicate a version of an AMT protocol;
packet type (Type): with a value of 2, used to indicate an AMT packet type, so that after a packet of this type is received, the packet is determined as an advertisement packet based on "Type=2";
reserved (Reserved): indicates a reserved field;
discovery nonce (Discovery Nonce): used for verification;
relay device address information (Relay Address M (IPv4 or IPv6)): indicates an IPv4 address or an IPv6 address of the root node (namely, the first network device); and
relay device address information (Relay Address B (IPv4 or IPv6)): indicates an IPv4 address or an IPv6 address of the root node (namely, the second network device).

Based on the implementation processes shown in FIG. 5a and FIG. 5b, in step S102, "relay device address information (Relay Address M (IPv4 or IPv6))" and "relay device address information (Relay Address B (IPv4 or IPv6))" are respectively used to carry addresses of "dual-root" nodes, to indicate the addresses of the "dual-root" nodes to the multicast source. In this case, the multicast source can determine that the root node in the AMT network includes the at least two network devices, to implement dual-root protection in a process of transmitting the multicast data packet over the AMT network.

It should be understood that, in frame formats shown in FIG. 5a and FIG. 5b, values of quantities of octets (or quantities of bits) of different fields and an order of the different fields are not limited in this application. The values of quantities of octets (or quantities of bits) of the different fields in the frame formats shown in FIG. 5a and FIG. 5b and the order of the different fields are merely an implementation example. The values of quantities of octets (or quantities of bits) of the different fields in the frame formats shown in FIG. 5a and FIG. 5b may alternatively be other values, and the order of the different fields in the frame formats shown in FIG. 5a and FIG. 5b may alternatively be another field order. This is not limited herein. In addition, the different fields in the frame formats shown in FIG. 5a and FIG. 5b may be independently implemented.

It should be noted that security control may be performed herein to ensure that step S102 is performed only when the first network device receives a first packet sent from a specified multicast source IP address, so as to prevent an attack or a non-dual-homing multicast source scenario.

In a possible implementation, the first network device is a relay (relay) device. It should be understood that the first network device (or the second network device) is a receiver of the first packet in the AMT network device (or a sender of the response packet for the first packet in the AMT network), and a name of the first network device (or the second network device) may be a relay device currently defined in the AMT network. With development of AMT network technologies, the first network device (or the second network device) may alternatively be in another name. This is not limited in this application.

In a possible implementation, a logical interface address of the first network device is the same as a logical interface address of the second network device; or a physical interface address of the first network device is the same as a physical interface address of the second network device. Specifically, because a destination address of the first packet is the logical interface address (or the physical interface address) of the first network device, the logical interface address of the first network device is made to be the same as the logical interface address of the second network device (or the physical interface address of the first network device is the same as the physical interface address of the second network device), to ensure that a routing path between the multicast source and the second network device is connected. In other words, after the first network device sends the response packet for the first packet to the multicast source, it needs to be ensured that the multicast source can subsequently communicate with the second network device via the connected routing path.

In a possible implementation, an internet protocol (internet protocol, IP) address of the first network device is different from an interface IP address of the second network device.

Specifically, the IP address of the first network device is different from the IP address of the second network device, so that subsequent multicast data packets from the multicast source can be respectively sent to the first network device and the second network device based on the different IP addresses, to implement dual-root protection in a process of transmitting the multicast data packet over the AMT network.

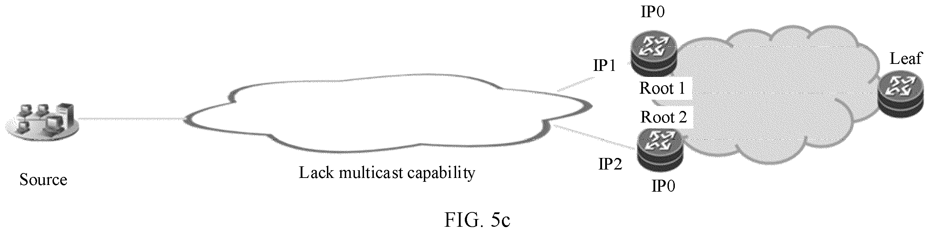

For example, FIG. 5c is used as an implementation example. The multicast source may be a "source" node in FIG. 5c, the first network device may be a "root 1" node in FIG. 5c, and the second network device may be a "root 2" node in FIG. 5c. As shown in FIG. 5c, an IP address between the first network device and a "Lack multicast Capability" network is "IP1", and an IP address between the second network device and the "Lack multicast Capability" network is "IP2". In this implementation, "IP1" is different from "IP2". In this way, a subsequent multicast data packet from the multicast source can be sent to the first network device based on "IP1", or may be sent to the second network device based on "IP2", so as to implement dual-root protection in a process of transmitting the multicast data packet over the AMT network.

Optionally, in FIG. 5c, the first network device may further have a logical interface address or physical interface address whose IP address is denoted as "IP0", and the second network device may also have a logical interface address or physical interface address whose IP address is denoted as "IP0". The two IP addresses can be the same. In addition, "IP0" may be a destination address of the first packet (namely, the discovery packet) in step S101, so that both the first network device and the second network device can receive the first packet from the multicast source. In other words, after the first network device sends the response packet for the first packet to the multicast source, it needs to be ensured that the multicast source can subsequently communicate with the second network device via the connected routing path (that is, "IP0").

In a possible implementation, after the first network device receives the first packet from the multicast source in step S101, the method further includes: The first network device sends a second packet to the second network device, where the second packet includes address information of the multicast source, and the second packet is used to advertise the multicast source.

Specifically, after the first network device receives, from the multicast source, the first packet used to discover the root node, the first network device sends, to the second network device, the second packet used to advertise the multicast source, so that the second network device determines that the second network device is to serve as one of root nodes for transmitting the multicast data packet, to implement dual-root protection in a process of transmitting the multicast data packet over the AMT network.

It should be understood that the second packet may be any packet included during communication between "the multicast source and the relay device", and include a request message (Request Message) packet, a membership query message (Membership Query Message) packet, a membership update message (Membership Update Message) packet, or another packet. This is not limited herein.

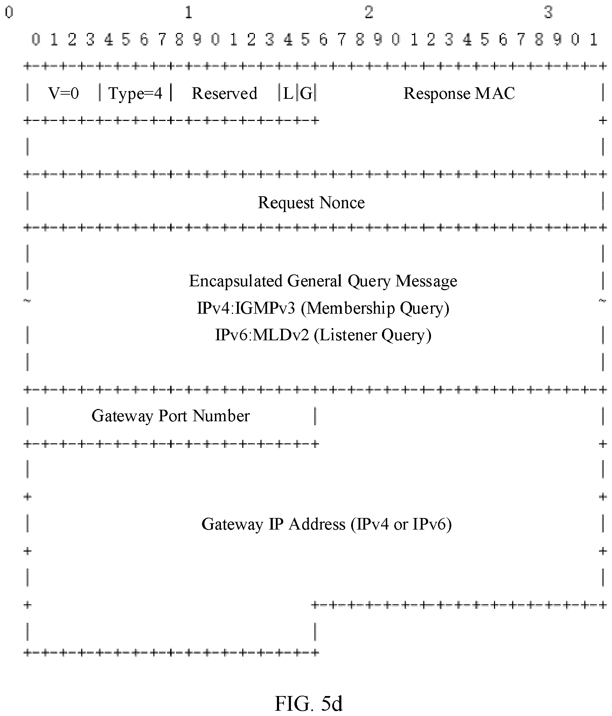

In an implementation example, the second packet is a membership query message packet. An implementation example of a frame structure of the packet may be implemented in a manner shown in FIG. 5d. As shown in FIG. 5d, the second packet includes the following fields:
version (Version, denoted as V): with a value of 0, used to indicate a version of an AMT protocol;
packet type (Type): with a value of 4, used to indicate an AMT packet type, so that after a packet of this type is received, the packet is determined as a membership query message packet based on "Type=4";
reserved (Reserved): indicates a reserved field;
"L": Limit (L) Flag: with a length of 1 bit; if the length is set to 1, it indicates that the relay (relay) does not accept an update message from a new gateway and ignores the message; or if the length is set to 0, it indicates that there is no special restriction;
"G": Gateway Address (G) Flag: with a length of 1 bit; if the length is set to 0, it indicates that the information does not carry a port number and related IP information of the gateway; or if the length is set to 1, it indicates that the information carries related information;
response MAC (Response MAC) address: with a length of 48 bits, the address is source identity authentication information generated by the relay, and the gateway needs to correspond to this information;
request nonce (Request Nonce): with a length of 32 bits, the request nonce is equal to a value of a request nonce field carried in a request message, the relay needs to carry this information, and the gateway needs to depend on this information when subsequently matching with the relay; and
encapsulated general query message (Encapsulated General Query Message): indicates an internet group management protocol (internet group management protocol, IGMP) message or a multicast listener discovery (multicast listener discovery, MLD) message generated by the relay, and this field mainly includes the following IP data:
   IPv4:IGMPv3 (Membership Query): used to query a relay member address;
   IPv6:MLDv2 (Listener Query): used to query a listener address;
   Gateway Port Number: with a length of 16 bits, used to indicate a UDP port number; and
   Gateway IP Address (IPv4 or IPv6): with a length of 16 bytes, may be used by the first network device relay to relay a source IP address of the gateway to the second network device, so that the second network device can initiate, in response to a multicast source gateway, a discover packet for searching for the relay.

According to the technical solutions shown in FIG. 4 to FIG. 5d, the response packet, for the first packet, sent by the first network device to the multicast source in step S102 after the first network device receives, from the multicast source, the first packet used to discover the root node in step S101 includes the address information of the root node, and the root node includes the first network device and the second network device. In other words, the response packet, for the first packet, received by the multicast source includes address information of at least two network devices that serve as root nodes. In view of this, the multicast source can determine that the root node in the AMT network includes the at least two network devices, to implement dual-root protection in a process of transmitting a multicast data packet over the AMT network, so as to avoid transmission interruption and improve network stability.

In the technical solutions shown in FIG. 4 to FIG. 5d, after the multicast source receives the response packet for the first packet in step S102, and determines, based on the response packet for the first packet, that the root node in the AMT network includes the at least two network devices, the multicast source may transmit the multicast data packet in a plurality of implementations. The following further describes the implementations with reference to FIG. Se.

FIG. Se is another diagram of a method 200 for discovering a root node according to this application. The method 200 includes the following steps.

S201: A multicast source sends a first packet.

In this embodiment, the multicast source sends the first packet in step S201, and correspondingly, a first network device receives the first packet in step S201. The first packet is used to discover a root node.

S202: The first network device sends a response packet for the first packet.

In this embodiment, the first network device sends the response packet for the first packet in step S202, and correspondingly, the multicast source receives the response packet for the first packet in step S202. The response packet for the first packet includes address information of the root node, and the root node includes the first network device and a second network device.

It should be noted that, for implementation processes of step S201 and step S202, refer to implementation processes of step S101 and step S102, and corresponding technical effects are implemented. Details are not described herein again.

S203: The first network device obtains multicast packet data.

S204: The first network device sends the multicast packet data to a leaf node.

In this embodiment, after the first network device obtains the multicast data packet in step S203, the first network device sends the multicast packet data to the leaf node in step S204, and correspondingly, the leaf node receives the multicast packet data in step S204.

Specifically, after the first network device sends the response packet for the first packet to the multicast source in step S202, the first network device obtains the multicast data packet in step S203, and sends the multicast data packet to the leaf node in step S204, so that the leaf node obtains the multicast data packet, to transmit the multicast data packet over an AMT network.

In a possible implementation, in step S202, after the multicast source determines, based on the response packet sent by the first network device, that the root node in the AMT network includes the at least two network devices, the multicast source may transmit the multicast data packet in a plurality of implementations. The following separately describes the implementations.

Implementation 1: A process in which the first network device obtains the multicast data packet includes: The first network device receives the multicast data packet from the multicast source.

In a possible implementation, after receiving the response packet for the first packet in step S202, the multicast source determines that random code in a "random nonce" field in the response packet for the first packet is the same as that in a random nonce field in the first packet. In this case, it may be determined that the response is a valid response. In addition, because the response packet for the first packet carries addresses of the two network devices, the multicast source actively creates two "IP tunnels" that separately uses an address of the first network device and an address of the second network device as destination addresses. Then, the multicast data packet is encapsulated into a unicast packet through AMT, and the unicast packet is replicated into two copies which are respectively sent to the first network device and the second network device (that is, the multicast source performs step A and step B1 in FIG. Se). Alternatively, the multicast data packet is encapsulated into a unicast packet through AMT, and the unicast packet is sent to only the first network device or the second network device (that is, the multicast source performs step A or step B1 in FIG. Se).

Specifically, in the implementation 1, the multicast source sends multicast data packets to the at least two network devices (that is, the multicast source performs step A and step B1 in FIG. Se). Alternatively, in the implementation 1, the multicast source sends a multicast data packet to the first network device in the at least two network devices, and the multicast source does not send a multicast data packet to the second network device in the at least two network devices (that is, the multicast source performs step A but does not perform step B1 in FIG. Se). In view of this, the first network device can obtain, by receiving the multicast data packet from the multicast source, a multicast data packet subsequently sent to the leaf node.

In a possible implementation of the implementation 1, the method further includes: The first network device sends the multicast data packet to the second network device. Specifically, in the implementation 1, when the multicast source sends the multicast data packet to the first network device in the at least two network devices, and the multicast source does not send the multicast data packet to the second network device in the at least two network devices, the first network device may further send the multicast data packet to the second network device, so that the second network device can also obtain the multicast data packet. This improves reliability of transmitting the multicast data packet over the AMT network through forwarding of the multicast data packet between different root nodes and in a redundancy protection manner, to implement dual-root protection.

Implementation 2: That the first network device obtains a multicast data packet includes: The first network device receives a multicast data packet from the second network device in step B2 in FIG. Se.

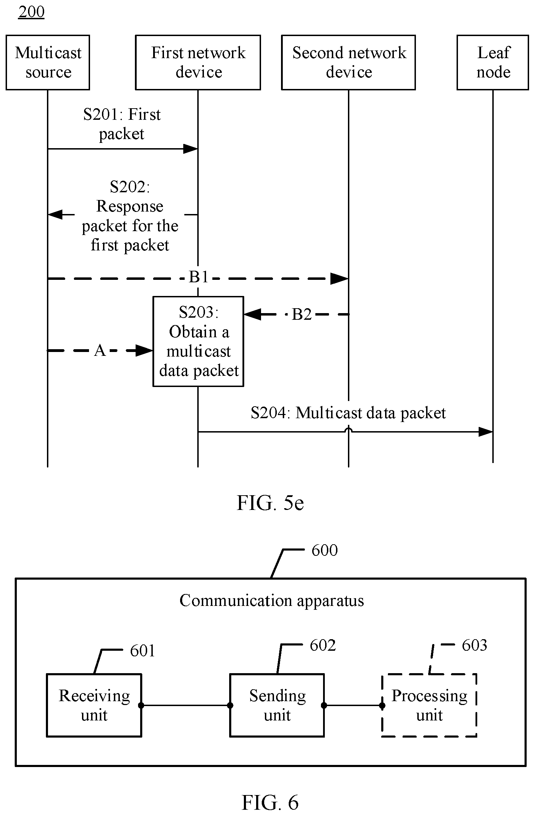

According to the foregoing technical solution, in the implementation 2, the multicast source sends the multicast data packet to the second network device in the at least two network devices, and the multicast source does not send the multicast data packet to the first network device in the at least two network devices (that is, the multicast source performs step B 1 but does not perform step A in FIG. Se). In view of this, the first network device can obtain, by receiving the multicast data packet from the second network device in step B2 in FIG. 5e, a multicast data packet subsequently sent to the leaf node. In addition, the implementation 2 improves reliability of transmitting the multicast data packet over the AMT network through forwarding of the multicast data packet between different root nodes and in a redundancy protection manner, to implement dual-root protection.

In a possible implementation, after that the first network device sends a response packet for the first packet to the multicast source in step S202, the method further includes: When the first network device determines that the second network device fails, the first network device sends first indication information to the multicast source, where the first indication information indicates that the second network device fails.

Specifically, the first network device sends the response packet for the first packet to the multicast source, so that the multicast source determines that the root node in the AMT network includes the first network device and the second network device. Then, when the first network device determines that the second network device fails, the first network device sends, to the multicast source, the first indication information indicating that the second network device fails. In view of this, the multicast source can determine, based on the first indication information, that the second network device fails, so that the multicast source determines that the root node in the AMT network, namely, the second network device, does not have a capability of forwarding a multicast data packet.

Optionally, after receiving the first indication information, the multicast source may stop sending the multicast data packet to the second network device, to reduce overheads.

Optionally, when the first network device determines that the second network device fails, the first network device stops sending the multicast data packet to the second network device, to reduce overheads.

Further, optionally, after that the first network device sends first indication information to the multicast source, the method further includes: When the first network device determines that the second network device recovers from the failure, the first network device sends second indication information to the multicast source, where the second indication information indicates that the second network device recovers from the failure.

Specifically, after the first network device sends, to the multicast source, the first indication information indicating that the second network device fails, when the first network device determines that the second network device recovers from the failure, the first network device sends, to the multicast source, the second indication information indicating that the second network device recovers from the failure. In view of this, the multicast source can determine, based on the second indication information, that the second network device recovers from the failure, so that the multicast source determines that the root node in the AMT network, namely, the second network device, is to recover a capability of forwarding a multicast data packet.

Optionally, after receiving the second indication information, the multicast source can further send the multicast data packet to the second network device, to implement dual-root protection in a process of transmitting the multicast data packet over the AMT network.

Optionally, when the first network device determines that the second network device recovers from the failure, the first network device (resumes sending) sends the multicast data packet to the second network device, to implement dual-root protection in a process of transmitting the multicast data packet over the AMT network.

The foregoing describes embodiments of this application from a perspective of a method, and the following describes, from a perspective of an apparatus, an apparatus for discovering a root node provided in embodiments of this application.

Refer to FIG. 6. An embodiment of this application provides an apparatus for discovering a root node. The apparatus 600 for discovering a root node can implement a function of the apparatus for discovering a root node (including a first network device or a multicast source) in the foregoing method embodiments, and therefore can also implement beneficial effects of the foregoing method embodiments.

The apparatus 600 for discovering a root node includes a receiving unit 601 and a sending unit 602. When the apparatus 600 for discovering a root node is configured to implement a function of the first network device in the foregoing embodiment, the apparatus 600 for discovering a root node includes the following implementation process. The receiving unit 601 is configured to receive a first packet from a multicast source, where the first packet is used to discover a root node; and the sending unit 602 is configured to send a response packet for the first packet to the multicast source, where the response packet for the first packet includes address information of the root node, and the root node includes the first network device and the second network device.

In a possible implementation, the receiving unit 601 is further configured to obtain a multicast data packet; and the sending unit 602 is further configured to send the multicast data packet to a leaf node.

In a possible implementation, the receiving unit 601 is specifically configured to receive a multicast data packet from the multicast source. The sending unit 602 is further configured to send the multicast data packet to the second network device.

In a possible implementation, the receiving unit 601 is specifically configured to receive a multicast data packet from the second network device.

In a possible implementation, the sending unit 602 is further configured to send a second packet to the second network device, where the second packet includes address information of the multicast source, and the second packet is used to advertise the multicast source.

In a possible implementation, the apparatus further includes a processing unit 603; and the sending unit 602 is further configured to send first indication information to the multicast source when the processing unit 603 determines that the second network device fails, where the first indication information indicates that the second network device fails.

In a possible implementation, the sending unit 602 is further configured to send second indication information to the multicast source when the processing unit 603 determines that the second network device recovers from the failure, where the second indication information indicates that the second network device recovers from the failure.

In a possible implementation, a logical interface address of the first network device is the same as a logical interface address of the second network device; or a physical interface address of the first network device is the same as a physical interface address of the second network device.

In a possible implementation, an IP address of the first network device is different from an IP address of the second network device.

In a possible implementation, the first packet is a discovery packet, and the response packet for the first packet is an advertisement packet.

In a possible implementation, the first network device is a relay device in an AMT network.

When the apparatus 600 for discovering a root node is configured to implement a function of the multicast source in the foregoing embodiment, the apparatus 600 for discovering a root node includes the following implementation process.

The sending unit 602 is configured to send a first packet, where the first packet is used to discover a root node.

The receiving unit 601 is configured to receive a response packet for the first packet from the first network device, where the response packet for the first packet includes address information of the root node, and the root node includes the first network device and the second network device.

In a possible implementation, the sending unit 602 is further configured to send a multicast data packet to the first network device and/or the sending unit 602 is further configured to send a multicast data packet to the second network device.

In a possible implementation, the apparatus further includes a processing unit 603; the receiving unit 601 is further configured to receive first indication information from the first network device, where the first indication information indicates that the second network device fails; and the processing unit 603 is configured to determine, based on the first indication information, to stop sending the multicast data packet to the second network device.

In a possible implementation, the receiving unit 601 is further configured to obtain second indication information, where the second indication information indicates that the second network device recovers from the failure; and the sending unit 602 is further configured to send the multicast data packet to the second network device based on the second indication information.

In a possible implementation, the receiving unit 601 is specifically configured to: receive the second indication information from the first network device; or receive the second indication information from the second network device.

In a possible implementation, the first packet is a discovery packet, and the response packet for the first packet is an advertisement packet.

In a possible implementation, the first network device is a relay device.

It should be noted that, for details such as an information execution process of the foregoing unit of the apparatus 600 for discovering a root node, refer to descriptions in the foregoing method embodiments of this application. Details are not described herein again.

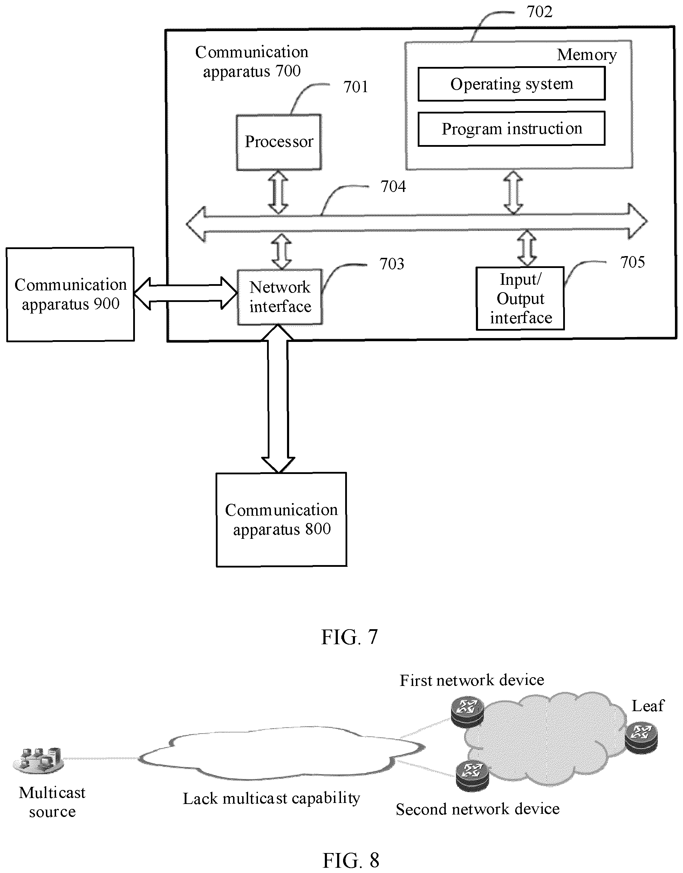

An embodiment of this application further provides an apparatus 700 for discovering a root node. FIG. 7 is a diagram of a structure of the apparatus 700 for discovering a root node according to an embodiment of this application.

Optionally, the apparatus 700 for discovering a root node performs functions of the first network device in FIG. 4 and related embodiments. An apparatus 800 for discovering a root node and an apparatus 900 for discovering a root node respectively perform functions of a multicast source and a second network device in FIG. 4 and related embodiments.

Optionally, the apparatus 700 for discovering a root node performs functions of a multicast source in FIG. 4 and related embodiments. The apparatus 800 for discovering a root node and the apparatus 900 for discovering a root node respectively perform functions of a first network device and a second network device in FIG. 4 and related embodiments.

The apparatus 700 for discovering a root node shown in FIG. 7 includes a memory 702 and at least one processor 701.

Optionally, the processor 701 implements the method in the foregoing embodiments by reading instructions stored in the memory 702, or the processor 701 may implement the method in the foregoing embodiments by executing instructions stored inside. When the processor 701 implements the method in the foregoing embodiments by reading the instructions stored in the memory 702, the memory 702 stores the instructions for implementing the method provided in the foregoing embodiments of this application.

Optionally, the at least one processor 701 is one or more CPUs, a single-core CPU, or a multi-core CPU.

Further, optionally, the at least one processor 701 may be further configured to: perform an implementation process corresponding to the processing unit 603 in the embodiment shown in FIG. 6, and implement corresponding beneficial effects. Details are not described herein again.

The memory 702 includes but is not limited to a RAM, a ROM, an EPROM, a flash memory, or an optical memory. The memory 92 stores instructions of an operating system.

After program instructions stored in the memory 702 are read by the at least one processor 701, the apparatus for discovering a root node performs a corresponding operation in the foregoing embodiment.

Optionally, the apparatus for discovering a root node shown in FIG. 7 further includes a network interface 703. The network interface 703 may be a wired interface, for example, an FDDI or a GE interface. Alternatively, the network interface 703 may be a wireless interface. The network interface 703 is configured to: send and receive data in FIG. 4 and related embodiments.

Further, optionally, the network interface 703 may be further configured to: perform implementation processes corresponding to the receiving unit 601 and the sending unit 602 in the embodiment shown in FIG. 6, and implement corresponding beneficial effects. Details are not described herein again.

It should be understood that the network interface 703 has a function of receiving data and a function of sending data. The function of "receiving data" and the function of "sending data" may be integrated into a same transceiver interface for implementation, or the function of "receiving data" and the function of "sending data" may be separately implemented through different interfaces. This is not limited herein. In other words, the network interface 703 may include one or more interfaces, configured to implement the function of "receiving data" and the function of "sending data".

For other functions that can be performed by the apparatus 700 for discovering a root node after the processor 701 reads the program instructions in the memory 702, refer to descriptions in the foregoing method embodiments.

Optionally, the apparatus 700 for discovering a root node further includes a bus 704. The processor 701 and the memory 702 are usually connected to each other through the bus 704, or may be connected to each other in another manner.

Optionally, the apparatus 700 for discovering a root node further includes an input/output interface 705. The input/output interface 705 is configured to: connect to an input device, and receive, via the input device, related configuration information input by a user or another device can interact with the apparatus 700 for discovering a root node. The input device includes but is not limited to, a keyboard, a touchscreen, and a microphone.

The apparatus 700 for discovering a root node provided in this embodiment of this application is configured to: perform the methods performed by the apparatus (the first network device or a server) for discovering a root node provided in the foregoing method embodiments, and implement corresponding beneficial effects.

For example, the apparatus 700 for discovering a root node performs functions of the first network device in FIG. 4 and related embodiments. In this case, the apparatus 700 for discovering a root node receives a first packet from the apparatus 800 for discovering a root node, where the first packet is used to discover a root node; and the apparatus 700 for discovering a root node sends a response packet for the first packet to the apparatus 800 for discovering a root node, where the response packet for the first packet includes address information of the root node, and the root node includes the apparatus 700 for discovering a root node and the apparatus 900 for discovering a root node. In other words, the response packet, for the first packet, received by the apparatus 800 for discovering a root node includes address information of at least two network devices that serve as root nodes. In view of this, the apparatus 800 for discovering a root node can determine that a root node in an AMT network includes the at least two network devices, to implement dual-root protection in a process of transmitting a multicast data packet over the AMT network, so as to avoid transmission interruption and improve network stability.

For another example, the apparatus 700 for discovering a root node performs functions of a multicast source in FIG. 4 and related embodiments. In this case, the apparatus 700 for discovering a root node sends a first packet to the apparatus 800 for discovering a root node, where the first packet is used to discover a root node; and the apparatus 700 for discovering a root node receives a response packet for the first packet from the apparatus 800 for discovering a root node, where the response packet for the first packet includes address information of the root node, and the root node includes the apparatus 800 for discovering a root node and the apparatus 900 for discovering a root node. In other words, the response packet, for the first packet, received by the apparatus 700 for discovering a root node includes address information of at least two network devices that serve as root nodes. In view of this, the apparatus 700 for discovering a root node can determine that a root node in an AMT network includes the at least two network devices, to implement dual-root protection in a process of transmitting a multicast data packet over the AMT network, so as to avoid transmission interruption and improve network stability.

For specific implementations of the apparatus for discovering a root node shown in FIG. 7, refer to descriptions in the foregoing method embodiments. Details are not described herein again.

An embodiment of this application further provides a system for discovering a root node. FIG. 8 is a diagram of a system for discovering a root node according to an embodiment of this application.

As shown in FIG. 8, this application relates to a multicast source. A first network device, a second network device, and a leaf node may be applied to an AMT network. The AMT network may include the multicast source and a multicast receiver (for example, a "leaf" node in FIG. 8).

In FIG. 8, the first network device and the second network device may serve relay devices in the AMT network. Optionally, the AMT network further includes another relay device.

In an implementation example, in the system for discovering a root node shown in FIG. 8, the first network device receives a first packet from the multicast source, where the first packet is used to discover a root node; and the first network device sends a response packet for the first packet to the multicast source, where the response packet for the first packet includes address information of the root node, and the root node includes the first network device and the second network device. In other words, the response packet, for the first packet, received by the multicast source includes address information of at least two network devices that serve as root nodes. In view of this, the multicast source can determine that the root node in the AMT network includes the at least two network devices, to implement dual-root protection in a process of transmitting a multicast data packet over the AMT network, so as to avoid transmission interruption and improve network stability.

It should be understood that, in the system for discovering a root node shown in FIG. 8, the multicast source, the first network device, the second network device, and the leaf node may further apply the methods in other embodiments in the foregoing embodiments, and implement corresponding technical effects. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A method for discovering a root node, wherein the method is applied to an automatic multicast tunneling AMT network, and the method comprises:
receiving, by a first network device, a first packet from a multicast source, wherein the first packet is used to discover a root node; and
sending, by the first network device, a response packet for the first packet to the multicast source, wherein the response packet for the first packet comprises address information of the root node, and the root node comprises the first network device and a second network device.

2. The method according to claim 1, wherein after the sending, by the first network device, a response packet for the first packet to the multicast source, the method further comprises:
obtaining, by the first network device, a multicast data packet; and
sending, by the first network device, the multicast data packet to a leaf node.

3. The method according to claim 2, wherein the obtaining, by the first network device, a multicast data packet comprises:
receiving, by the first network device, a multicast data packet from the multicast source.

4. The method according to claim 3, wherein the method further comprises:
sending, by the first network device, the multicast data packet to the second network device.

5. The method according to claim 2, wherein the obtaining, by the first network device, a multicast data packet comprises:
receiving, by the first network device, a multicast data packet from the second network device.

6. The method according to any one of claims 1 to 5, wherein after the receiving, by a first network device, a first packet from a multicast source, the method further comprises:
sending, by the first network device, a second packet to the second network device, wherein the second packet comprises address information of the multicast source, and the second packet is used to advertise the multicast source.

7. The method according to any one of claims 1 to 6, wherein after the sending, by the first network device, a response packet for the first packet to the multicast source, the method further comprises:
when the first network device determines that the second network device fails, sending, by the first network device, first indication information to the multicast source, wherein the first indication information indicates that the second network device fails.

8. The method according to claim 7, wherein after the sending, by the first network device, first indication information to the multicast source, the method further comprises:
when the first network device determines that the second network device recovers from the failure, sending, by the first network device, second indication information to the multicast source, wherein the second indication information indicates that the second network device recovers from the failure.

9. The method according to any one of claims 1 to 8, wherein
a logical interface address of the first network device is the same as a logical interface address of the second network device; or
a physical interface address of the first network device is the same as a physical interface address of the second network device.

10. The method according to any one of claims 1 to 9, wherein an internet protocol IP address of the first network device is different from an IP address of the second network device.

11. The method according to any one of claims 1 to 10, wherein
the first packet is a discovery (Discovery) packet, and the response packet for the first packet is an advertisement (Advertisement) packet.

12. The method according to any one of claims 1 to 11, wherein the first network device is a relay (relay) device.

13. A method for discovering a root node, wherein the method is applied to an automatic multicast tunneling AMT network and comprises:
sending, by a multicast source, a first packet, wherein the first packet is used to discover a root node; and
receiving, by the multicast source, a response packet for the first packet from a first network device, wherein the response packet for the first packet comprises address information of the root node, and the root node comprises the first network device and a second network device.

14. The method according to claim 13, wherein after the receiving, by the multicast source, a response packet for the first packet from a first network device, the method further comprises:
sending, by the multicast source, a multicast data packet to the first network device.

15. The method according to claim 13 or 14, wherein after the receiving, by the multicast source, a response packet for the first packet from a first network device, the method further comprises:
sending, by the multicast source, a multicast data packet to the second network device.

16. The method according to claim 15, wherein the method further comprises:
receiving, by the multicast source, first indication information from the first network device, wherein the first indication information indicates that the second network device fails; and
determining, by the multicast source based on the first indication information, to stop sending the multicast data packet to the second network device.

17. The method according to claim 16, wherein after the determining, by the multicast source based on the first indication information, to stop sending the multicast data packet to the second network device, the method further comprises:
obtaining, by the multicast source, second indication information, wherein the second indication information indicates that the second network device recovers from the failure; and
sending, by the multicast source, the multicast data packet to the second network device based on the second indication information.

18. The method according to claim 17, wherein the obtaining, by the multicast source, second indication information comprises:
receiving, by the multicast source, the second indication information from the first network device; or
receiving, by the multicast source, the second indication information from the second network device.

19. The method according to any one of claims 13 to 18, wherein
the first packet is a discovery (Discovery) packet, and the response packet for the first packet is an advertisement (Advertisement) packet.

20. The method according to any one of claims 13 to 19, wherein the first network device is a relay (relay) device.

21. An apparatus for discovering a root node, wherein the apparatus is disposed in a first network device in an automatic multicast tunneling AMT multicast network, and the apparatus comprises a receiving unit and a sending unit;
the receiving unit is configured to receive a first packet from a multicast source, wherein the first packet is used to discover a root node; and
the sending unit is configured to send a response packet for the first packet to the multicast source, wherein the response packet for the first packet comprises address information of the root node, and the root node comprises the first network device and a second network device.

22. The apparatus according to claim 21, wherein
the receiving unit is further configured to obtain a multicast data packet; and
the sending unit is further configured to send the multicast data packet to a leaf node.

23. The apparatus according to claim 22, wherein
the receiving unit is specifically configured to receive a multicast data packet from the multicast source.

24. The apparatus according to claim 23, wherein
the sending unit is further configured to send the multicast data packet to the second network device.

25. The apparatus according to claim 22, wherein
the receiving unit is specifically configured to receive a multicast data packet from the second network device.

26. The apparatus according to any one of claims 21 to 25, wherein
the sending unit is further configured to send a second packet to the second network device, wherein the second packet comprises address information of the multicast source, and the second packet is used to advertise the multicast source.

27. The apparatus according to any one of claims 21 to 26, wherein the apparatus further comprises a processing unit; and
the sending unit is further configured to send first indication information to the multicast source when the processing unit determines that the second network device fails, wherein the first indication information indicates that the second network device fails.

28. The apparatus according to claim 27, wherein
the sending unit is further configured to send second indication information to the multicast source when the processing unit determines that the second network device recovers from the failure, wherein the second indication information indicates that the second network device recovers from the failure.

29. The apparatus according to any one of claims 21 to 28, wherein
a logical interface address of the first network device is the same as a logical interface address of the second network device; or
a physical interface address of the first network device is the same as a physical interface address of the second network device.

30. The apparatus according to any one of claims 21 to 29, wherein an internet protocol IP address of the first network device is different from an IP address of the second network device.

31. The apparatus according to any one of claims 21 to 30, wherein
the first packet is a discovery (Discovery) packet, and the response packet for the first packet is an advertisement (Advertisement) packet.

32. The apparatus according to any one of claims 21 to 31, wherein the first network device is a relay (relay) device in the AMT network.

33. An apparatus for discovering a root node, wherein the apparatus is disposed in a multicast source in an automatic multicast tunneling AMT multicast network, and the apparatus comprises a receiving unit and a sending unit;
the sending unit is configured to send a first packet, wherein the first packet is used to discover a root node; and
the receiving unit is configured to receive a response packet for the first packet from a first network device, wherein the response packet for the first packet comprises address information of the root node, and the root node comprises the first network device and a second network device.

34. The apparatus according to claim 33, wherein
the sending unit is further configured to send a multicast data packet to the first network device.

35. The apparatus according to claim 33 or 34, wherein
the sending unit is further configured to send a multicast data packet to the second network device.

36. The apparatus according to claim 35, wherein the apparatus further comprises a processing unit;
the receiving unit is further configured to receive first indication information from the first network device, wherein the first indication information indicates that the second network device fails; and
the processing unit is configured to determine, based on the first indication information, to stop sending the multicast data packet to the second network device.

37. The apparatus according to claim 36, wherein
the receiving unit is further configured to obtain second indication information, wherein the second indication information indicates that the second network device recovers from the failure; and
the sending unit is further configured to send the multicast data packet to the second network device based on the second indication information.

38. The apparatus according to claim 37, wherein the receiving unit is specifically configured to:
receive the second indication information from the first network device; or
receive the second indication information from the second network device.

39. The apparatus according to any one of claims 33 to 38, wherein
the first packet is a discovery (Discovery) packet, and the response packet for the first packet is an advertisement (Advertisement) packet.

40. The apparatus according to any one of claims 33 to 39, wherein the first network device is a relay (relay) device.

41. A system for discovering a root node, wherein the system comprises the apparatus according to any one of claims 21 to 32 and the apparatus according to any one of claims 33 to 40.
